# EUROPEAN PATENT SPECIFICATION

(11) **EP 3 360 039 B1**
(45) Date of publication and mention of the grant of the patent: **24.03.2021**
(21) Application number: 16787614.3
(22) Date of filing: 05.10.2016
(51) Int. Cl.: G06F 9/4401

(54) **MULTISTAGE BOOT IMAGE LOADING AND CONFIGURATION OF PROGRAMMABLE LOGIC DEVICES**
MEHRSTUFIGES LADEN VON BOOT-BILDERN UND KONFIGURIEREN PROGRAMMIERBARER LOGIKBAUELEMENTE
CHARGEMENT D'IMAGES D'AMORCE À MULTIPLES ÉTAPES ET CONFIGURATION DE DISPOSITIFS LOGIQUES PROGRAMMABLES

(30) Priority: 06.10.2015 US 201514876467; 03.11.2015 US 201514931037
(43) Date of publication of application: 15.08.2018
(73) Proprietor: Xilinx, Inc., San Jose, California 95124 (US)
(72) Inventor: ABHIRAM SAI KRISHNA, Bokka, San Jose, CA 95124 (US); SARMAH, Mrinal, J., San Jose, CA 95124 (US); KUMAR A V, Anil, San Jose, CA 95124 (US)
(74) Representative: Zimmermann & Partner Patentanwälte mbB
(86) International application number: PCT/US2016/055534
(87) International publication number: WO 2017/062479

(56) References cited:
- US-A1- 2007 260 868
- US-A1- 2012 102 305
- US-A1- 2013 124 840

## Description

### TECHNICAL FIELD

The disclosure generally relates to loading of boot images and configuration of programmable logic devices.

### BACKGROUND

There are a variety of different applications that can use memory circuits including, but not limited to, programmable logic devices (PLDs). PLDs are a well-known type of programmable integrated circuit (IC) that can be programmed to perform specified logic functions. One type of PLD, the field programmable gate array (FPGA), typically includes an array of programmable tiles. These programmable tiles comprise various types of logic blocks, which can include, for example, input/output blocks (IOBs), configurable logic blocks (CLBs), dedicated random access memory blocks (BRAM), multipliers, digital signal processing blocks (DSPs), processors, clock managers, delay locked loops (DLLs), bus or network interfaces such as Peripheral Component Interconnect Express (PCIe) and Ethernet, and so forth.

Some PLDs include enough components and functionality to effectively serve as an entire computer system on a single IC chip. PLDs with such functionality are sometimes referred to as a system on a chip (SOC). An SOC can include one or more processor circuits that execute software instructions in order to carry out different functions. Upon startup (e.g., hard-power on or hard reset), some of the earliest set of instructions executed by the SOC provide instructions for how to boot the SOC. For instance, the SOC can first execute a boot read only memory (ROM) that configures the SOC to load a first-stage boot loader (FSBL) image. The FSBL instructions can specify how peripheral functional blocks of the SOC are configured, control and implement a configuration bitstream, setup and run the operating system (OS), and other boot-related functions. Often, the boot image for an SOC can be loaded from a non-volatile memory, such as a read only memory (ROM) circuit.

As the size of the boot image used by SOCs increases, the size of the storage location for the boot image increases. The time required to load the boot image can also increase. Thus, the time before the SOC is fully-configured and operational can increase. The increased load time can be problematic in instances where it is desirable to have the SOC be available quickly, whether upon power-up or in similar situations. These and other problems can be problematic for SOC design and their use.

Document US 2013/124840 A1 describes a secure boot-up process in a system having a hardware-based root of trust. A system-on-chip, SoC, includes a number of processors and other components which are communicatively coupled together through a communication bus. In a non-volatile machine-readable medium first stage firmware and second stage firmware are stored. During the boot process the processor at first receives the first stage firmware and afterwards the second stage firmware through a communication bus.

### SUMMARY

Certain implementations are directed toward a method for booting a system-on-chip, SoC, that includes a processor circuit. The method can include configuring a communication bus by means of a hard I/O interface module which is implemented using circuitry in the SoC that is available upon power up; loading a boot read only memory, ROM, image over the communication bus; executing the boot read only memory, ROM, image to instruct the SoC to receive a first boot image over the communication bus; and receiving, using a storage interface circuit of the SoC, the first boot image from a nonvolatile memory chip. A soft bus interface module can be configured by executing the first boot image on a processor circuit of the SoC. The bus interface module can be designed to interface between a host device over a communication bus that links multiple devices and the SoC. The bus interface module can be used to communicate a second boot image from the memory of the host device to a memory of the SoC. The IC can be booted by executing the second boot image.

Optionally, the soft bus interface module may be further designed to communicate with the host device using a packet-based protocol and over a point-to-point link between the host device and the SoC.

Optionally, the packet-based protocol defines packets that encapsulate data and specify a destination address.

Optionally, the method further includes implementing a handshake protocol with the host device to provide the second boot image and the processor circuit of the SoC.

Optionally, the communication bus may be a Peripheral Component Interconnect Express, PCIe, communication bus and the SoC may include programmable logic tiles.

Optionally, configuring the soft bus interface module may include enumerating the soft bus interface module for communication with a root complex module of the host device.

Optionally, the method may further include setting a value in scratch pad memory space in response to completion of the enumeration of the soft bus interface module.

Optionally, the first boot image may be a boot read only memory (ROM) image and the second boot image may be a First Stage Boot Loader (FSBL) image.

Optionally, the first boot image may be a First Stage Boot Loader (FSBL) image and the second boot image may be a Second Stage Boot Loader (SSBL) image.

According to various implementations, a system includes a system-on-chip, SoC. The SoC includes programmable logic. A storage interface circuit is configured to receive a first boot image from a nonvolatile memory chip. A hard I/O interface module is implemented using circuitry in the SoC that is available upon power up. A processor circuit is configured to configure a communication bus by means of the hard I/O interface module; execute a boot read only memory, ROM, image to instruct the SoC to receive the first boot image over the communication bus; and execute the first boot image to program, using bitstream data, the programmable logic to implement a soft bus interface module that is configured to communicate with a host device over the communication bus that links multiple devices to the SoC, to configure the soft bus interface module to transfer a second boot image from a memory of the host device to the SoC, and to boot the SoC by executing the second boot image.

Optionally, the soft bus interface module may be further designed to communicate with the host device using a packet-based protocol and over a point-to-point link between the host device and the SoC.

Optionally, the packet-based protocol defines packets that encapsulate data and specify a destination address.

Optionally, the processor circuit may be further configured to implement a handshake protocol with the host device providing the second boot image.

Optionally, the storage interface circuit may be further configured to load a boot read only memory, ROM, image and the boot ROM image may include instructions for the SoC to perform the receiving of the first boot image from the nonvolatile memory chip.

Optionally, the communication bus may be a Peripheral Component Interconnect Express, PCIe, communication bus and the SoC may include programmable logic tiles.

Optionally, the processor circuit may be configured to configure the soft bus interface module as part of an enumeration process for the PCIe communication bus.

Optionally, the processor circuit may be configured to set a value in scratch pad memory space in response to completion of the enumeration of the soft bus interface module.

Optionally, the soft bus interface module may be configured to use 8B/10B encoding.

Optionally, the first boot image may be a First Stage Boot Loader (FSBL) image and the second boot image may be a Second Stage Boot Loader (SSBL) image.

Certain implementations are directed toward a method for configuring a programmable integrated circuit (IC). The method includes communicating, using a storage interface circuit of the programmable IC, a first set of configuration data between a storage circuit and the programmable IC. Using the first set of configuration data, the programmable IC is configured such that it includes: a bus interface module that is designed to interface with a host device over a communication bus that links multiple devices, and an internal configuration access interface that is designed to interface between the bus interface module and programmable logic of the programmable IC. Using direct memory access (DMA) transfers through the bus interface module, a second set of configuration data is communicated between a main memory circuit and the programmable IC. Using the second set of configuration data, the programmable logic of the programmable IC is configured.

Optionally, the bus interface module may be further designed to interface with the host device using a packet-based protocol and over a point-to-point link between the host device and the programmable IC.

Optionally, the packet-based protocol defines packets that encapsulate data and specify a destination address.

Optionally, configuring the programmable IC using the first set of configuration data may further include configuring the programmable IC to include a DMA engine.

Optionally, the method may further include communicating, from the host device to the DMA engine, at least one read command for a particular location in a memory of the host device, wherein the particular location stores the second set of configuration data.

Optionally, communicating the second set of configuration data using direct memory access (DMA) transfers to the bus interface module may further include configuring a root complex module of the host device to perform DMA accesses to a particular location in a memory of the host device, wherein the particular location stores the second set of configuration data.

Optionally, the method further includes configuring a base address register of the bus interface module for DMA transfers.

Optionally, the method further includes executing a software driver on a host device to communicate, using direct memory access (DMA) transfers through the bus interface module, the second set of configuration data.

Optionally, the method further includes setting up a Buffer Descriptor chain that contains information about a buffer address register and size of the second set of configuration data.

According to certain implementations, a system includes a programmable integrated circuit (IC). The programmable IC includes a first interface circuit connected to a storage circuit and configured to receive configuration data from the storage circuit and a second interface circuit connected to a communication bus that links multiple devices. The storage circuit stores a first set of configuration data that, upon loading into the programmable IC through the first interface circuit, is configured to create: a bus interface module that is designed to interface with a host device over the communication bus, an internal configuration access interface that is designed to interface between the bus interface module and programmable logic of the programmable IC; and a direct memory access (DMA) module that is designed to communicate, using direct memory access (DMA) transfers through the bus interface module, a second set of configuration data between a main memory circuit and the programmable IC.

Optionally, the bus interface module may be further designed to interface with the host device using a packet-based protocol and over a point-to-point link between the host device and the programmable IC.

Optionally, the packet-based protocol may define packets that encapsulate data and specify a destination address.

Optionally, the bus interface module may include a DMA engine.

Optionally, the DMA engine may be configured to access main memory in response to receiving at least one read command that specifies a particular location in a memory of the host device and for the second set of configuration data.

In certain implementations, a system includes a programmable integrated circuit (IC) that includes: a first interface circuit connected to a storage circuit and configured to receive configuration data from the storage circuit; and a second interface circuit connected to a communication bus that links multiple devices. The system includes the storage circuit, which stores a first set of configuration data that, upon loading into the programmable IC through the first interface circuit, is configured to create: a bus interface module that is designed to interface with a host device over the communication bus, and an internal configuration access interface that is designed to interface between the bus interface module and programmable logic of the programmable IC. The system also includes a host device having a direct memory access (DMA) engine that is designed to communicate, using direct memory access (DMA) transfers and through the bus interface module, a second set of configuration data between a main memory circuit and the programmable IC.

Optionally, the bus interface module may be further designed to interface with the host device using a packet-based protocol and over a point-to-point link between the host device and the programmable IC.

Optionally, the packet-based protocol may define packets that encapsulate data and specify a destination address.

Optionally, the host device may be configured to communicate, to the DMA engine, at least one read command that specifies a particular location in a memory of the host device, and the particular location may store the second set of configuration data.

Optionally, the DMA engine may be part of a root complex device.

Optionally, the host device and the direct memory access (DMA) engine may be configured to communicate the second set of configuration data using a software driver executing on a processor circuit of the host device.

Other features will be recognized from consideration of the Detailed Description and Claims, which follow.

### BRIEF DESCRIPTION OF THE DRAWINGS

Various aspects and features of the method, device, and system will become apparent upon review of the following detailed description and upon reference to the drawings in which:
FIG. 1 depicts a block diagram of a system for transferring boot image data using a serial bus, consistent with certain implementations;
FIG. 2 depicts a block diagram of a system configured to perform FSBL or primary boot over PCIe, consistent with implementations of the present disclosure;
FIG. 3 depicts a block diagramof a system configured to perform SSBL or secondary boot over PCIe, consistent with implementations of the present disclosure;
FIG. 4 depicts a system diagram of a computer system with PCIe components, consistent with various implementations;
FIG. 5 depicts a flow diagram for use with a system for transferring FSBL images using a configuration serial data bus, consistent with certain implementations;
FIG. 6 depicts a flow diagram for use with a system for transferring secondary boot images using a configuration serial data bus, consistent with certain implementations;
FIG. 7 depicts a flow diagram for a handshake process useful in the context of transferring FSBL images using a PCIe link, consistent with certain implementations;
FIG. 8 depicts a block diagram of a system for transferring configuration data using DMA, consistent with certain implementations;
FIG. 9 depicts a block diagram of a system with a system-on-chip (SoC) used as a root complex that includes DMA capabilities, consistent with implementations discussed herein;
FIG. 10 depicts a block diagram of a system with stage 1 logic configured with DMA capabilities in the PCIe endpoint, consistent with implementations discussed herein;
FIG. 11 depicts a system diagram of a computer system with PCIe components, consistent with various implementations;
FIG. 12 depicts a flow diagram for use with a system for transferring configuration data using DMA, consistent with certain implementations; and
FIG. 13 shows a programmable integrated circuit (IC) on which the disclosed circuits and processes may be implemented.

### DETAILED DESCRIPTION

In the following description, numerous specific details are set forth to describe specific examples presented herein. It should be apparent, however, to one skilled in the art, that one or more other examples and/or variations of these examples may be practiced without all the specific details given below. In other instances, well known features have not been described in detail so as not to obscure the description of the examples herein. For ease of illustration, the same reference numerals may be used in different diagrams to refer to the same elements or additional instances of the same element.

Various implementations are directed toward a system that is configured to use a serial bus interface (e.g., PCIe) module to load a boot image (e.g., FSBL, SSBL, or both). The boot process can be split into multiple boot stages such that an early stage can be used to configure the serial bus interface module and the programmable logic device. During a subsequent stage, a boot image can be loaded from an external source over the serial bus interface module. In certain implementations, the serial bus interface can use a protocol that provides a level of security against third-parties wishing to read data contained in the boot image (e.g., using encoding and/or data scrambling techniques). Various implementations can take advantage of high throughput resulting from the use of the high speed serial interface.

For implementations where the serial bus interface is PCIe, the data transferred over a PCIe link can be scrambled and 8B/10B encoded, which makes it difficult for an external intruder to easily decode the serial stream. For example, external intrusion may require that a PCIe link partner is inserted in the serial data path. Moreover, a PCIe interface can be configured to provide relatively-high speed data transfer (e.g., 2.5 Gbps, 5Gbps and 8 Gbps per lane and depending on the PCIe generation used). The high speed data transfer can be particularly useful for providing fast loading of a boot image and for speeding up the entire boot process.

In some implementations, the early stage, that configures the serial bus interface, can be carried out entirely from within the boot ROM, while the second stage can be transferring the entire FSBL image. Thus, the boot ROM can contain instructions for configuring an SOC processor circuit and a serial bus interface module to transfer the entire FSBL boot image used for the FSBL process.

In certain implementations, the early stage can include executing the boot ROM image as well as the FSBL image, and the second stage can include the transfer of a boot image used for a second stage bootloader (SSBL) process. The first portion of the boot image can contain the instructions for configuring an SOC processor circuit and a serial bus interface module to transfer the SSBL boot image during a subsequent stage.

In certain implementations, the first stage can contain sufficient configuration data to setup and configure a bus interface module that is designed to interface with a host device over a communication bus that links multiple devices together. The system can then load the boot image (in whole or in part) through the bus interface module. In this manner, the second stage transfers the boot image between a circuit that stores the boot image and the SOC. The SOC can then execute the instructions contained within the boot image to continue with the boot process.

According to various implementations, the bus interface module can be configured to communicate using a high speed serial bus protocol that is based upon a point-to-point topology and a packet-based protocol. A point-to-point topology can use a number of dedicated connections between devices, while a shared bus topology can use connections that are shared with three or more devices. Packet-based communication protocols allow for data to be transmitted in separate (small) blocks to a destination specified in each packet. As might be necessary, the packets for a particular communication stream can be reassembled upon receipt at the destination.

A particular example of a point-to-point topology that uses packets is Peripheral Component Interconnect Express (PCIe). For ease of discussion, various implementations will be discussed in the context of PCIe; however, it is understood that other protocols, topologies, and configurations are also possible.

In certain implementations, size of the data corresponding to the early stage can be kept relative small, e.g., so as to meet one or more design constraints. The design constraints can include, but are not necessarily limited to, a size of a boot ROM memory circuit, and meeting a desired load time for the early stage instructions. In various instances, the instructions for the early stage can be stored in a memory circuit that is accessible over a default/configuration interface of the programmable IC (PLD/FPGA). The interface to the memory circuit can be implemented using circuitry in the programmable IC that is available upon power-up and without first being configured. This type of interface can sometimes be referred to as a hard interface. For instance, the first set of configuration data (e.g., the Boot ROM image and possibly the FSBL image) can be stored in a persistent memory circuit, such as a flash memory circuit. Accordingly, the size of the configuration data for the first stage can be kept small enough to allow the configuration data to be loaded using the hard interface and the later portion of the boot image to be available on the bus.

Consistent with various implementations, the programmable IC can be configured to operate as an endpoint (EP) device and the source of the second stage image can be a host device. For instance, the high speed bus can be PCIe, the programmable IC can be a SoC that functions as a PCIe EP device, and the source of the second stage can be a remote computer with a central processing unit (CPU) and that is configured as the PCIe root complex (host). The EP device can act as a PCIe slave that is controlled by the remote CPU. If the SoC is a multiprocessor (MP) device, the host CPU can control application processing units (APUs), which can control the booting and co-processing functions of the MPSoC.

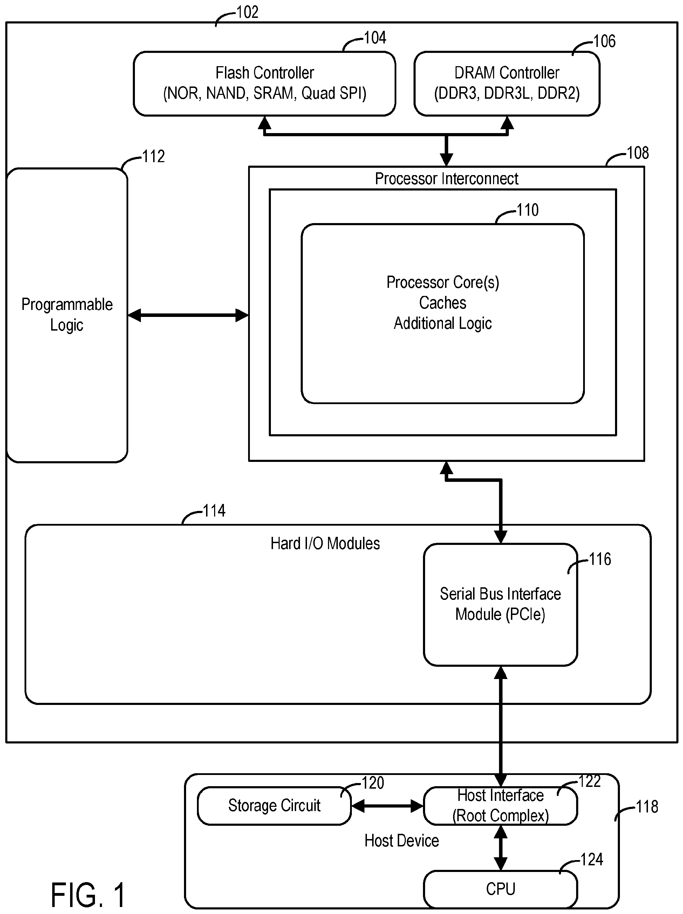

Turning now to the figures, FIG. 1 depicts a block diagram of a system for transferring boot image data using a serial bus, consistent with certain implementations. The block diagram includes a SoC device 102 with a number of circuit components. The particular SoC architecture shown in FIG. 1 is provided as an example. It is understood that a number of different SoC architectures can be used in conjunction with aspects and functions discussed herein. SoC device 102 is depicted as including one or more processor core(s) 110. The processor cores can also include caches and other logic circuitry. As discussed herein, SoC device 102 can include one or more APUs. In certain implementations, one of the APUs can be configured for use as a boot processor.

A processor interconnect 108 can provide an interface between the processor core(s) 110 and various other interface circuits. These additional circuits can include storage interface circuits, such as flash controller logic circuit 104 that is configured to load a first boot image upon powerup of the SoC from non-volatile memory circuits (e.g., flash memory circuits). DRAM controller logic circuit 106 can be configured to provide access to dynamic memory circuits. The dynamic memory circuits can include, but are not limited to, dynamic random access memory (DRAM) circuits that are configured to operate consistent with different versions of double-data rate (DDR) (e.g., DDR2, DDR3, DDR3L). Other types of RAM circuits are also possible.

Programmable logic circuit block 112 can include several different types of programmable logic blocks that are arranged in an array. For example, the programmable logic can include a large number of different programmable tiles such as multi-gigabit transceivers (MGTs), configurable logic blocks (CLBs), random access memory blocks (BRAMs), input/output blocks (IOBs), configuration and clocking logic, digital signal processing blocks, specialized input/output blocks, for example, clock ports, and other programmable logic such as digital clock managers, analog-to-digital converters, system monitoring logic, and so forth. It is noted that various SoC architectures might not include programmable logic. For ease of discussion various embodiments are discussed in the context of a SoC with programmable logic, however, the corresponding embodiments are not necessarily limited thereto.

Consistent with certain implementations, the SoC device 102 can include one or more additional hard input/output (I/O) interface modules 114. These I/O interface modules can be hard interface modules that are implemented using circuitry in the programmable IC that is available upon power-up and without first being configured in the programmable logic from a corresponding bitstream. The hard I/O interface modules 114 can include one or more serial bus interface modules 116 (e.g., a PCIe interface module). As discussed in more detail herein, the presence of a hard PCIe interface module can be particularly useful for allowing first stage boot loader (FSBL) images to be loaded over PCIe. In various implementations, a soft PCIe interface module can be used by configuration of logic in the programmable logic circuit block 112. As also discussed in more detail herein, the use of software PCIe interface modules can be useful for loading of second stage boot loader (SSBL) images; after the FSBL has been first used to configure the PCIe interface module within the programmable logic.

The serial bus interface module 116 can be configured to communicate with a (remote) host device 118. The host device 118 can be implemented using a variety of different computer systems including, but not limited to, an X-86 computer system. Host device 118 can include a CPU 124, a host interface module 122 and a storage circuit 120. According to various implementations, the host interface module 122 can control data flow between the host device and the SoC, which can function as a slave device. In a PCIe implementation, the host interface module 122 can function as the root complex of the PCIe hierarchy.

According to various implementations, a software driver running on CPU 124 can initiate and control the transfer of the second portion of the boot image, for use for the FSBL process. As discussed herein, the transfer can involve the use of a handshake protocol that indicates, to the SoC, when the transfer has started and when the transfer has completed. The SoC can execute a software driver that is also configured to use the handshake protocol, and the execution of the second portion of the boot image upon completion of the transfer.

Consistent with various implementations, initially a BootROM and then a first stage boot loader (FSBL) are executed. The PCIe link is configured and then a universal boot loader (u-boot) can be transferred from an external host machine over PCIe link to the local memory of the SoC.

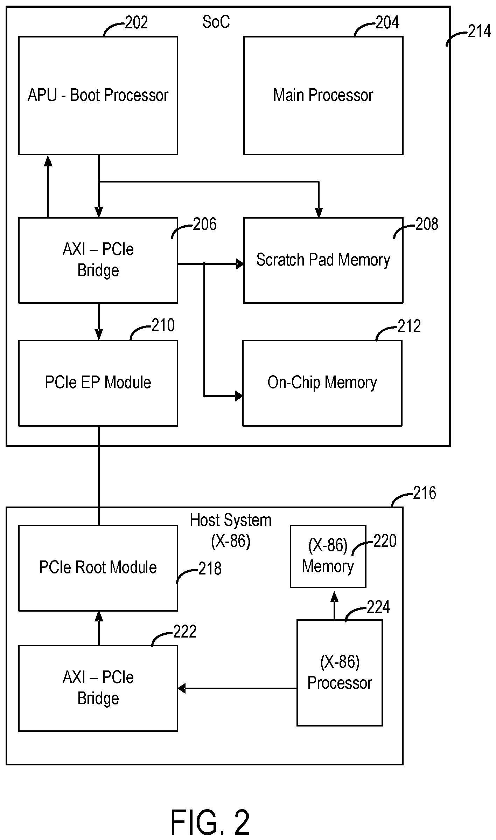

FIG. 2 depicts a block diagram of a system configured to perform FSBL, or primary boot, over PCIe, consistent with implementations of the present disclosure. According to certain implementations, the SoC 214 can be configured to retrieve the entire FSBL image over a PCIe interface. APU 202 can function as a boot processor that loads a boot ROM from a non-volatile memory upon powerup and otherwise helps setup the system to run using the main processor 204. The boot ROM can contain instructions that allow for initial configuration of SoC 214 including the configuration of the PCIe endpoint (EP) module 210 and the Advanced eXtensible Interface (AXI)-PCIe Bridge 206. The instructions can also set aside a portion of memory for use as scratch pad memory region 208. Once the APU 202 is ready for transfer of the FSBL image, the APU 202 can signal to the host system 216 by setting a flag in scratch pad memory region 208.

Host system 216 can include a processor circuit 224 and local memory 220. In certain implementations, the processor circuit 224 and local memory could be part of an X-86 system; however, other types of processor systems are also possible. The host system can include a PCIe root module 218 that is configured to operate as the root complex for the entire system (both for the host system 216 and for SoC 214). After startup, the PCIe root module can enumerate all PCIe endpoint devices in the overall system, including SoC 214. The enumeration process includes defining addressing mapping that allows the PCIe endpoint devices (including SoC 214) and PCIe root module to communicate.

Both APU 202 and processor circuit 224 are shown as interfacing with a bridge 206 and 222, respectively. Advanced eXtensible Interface (AXI) is an example of a local bus interface that can be used by processors; however, various implementations are not limited to the use of a specific bus interface.

According to some implementations, a software driver running on the host system 216 can be configured to detect when a flag is set in the scratch pad memory region 208. This detection can include, for example, polling the scratch pad memory region 208. The software driver can respond to detection of the flag by transferring the FSBL image to on-chip memory 212 using PCIe transactions. The software driver of the host system 216 can be configured to notify the software driver of the APU 202 that the transfer is completed. The notification to the APU 202 can be carried out using different solutions. For instance, the AXI-PCIe Bridge 206 can generate a local shared peripheral interrupt to the APU 202 once the software driver running on host system 216 has completed the transfer of the bootloader image. Alternatively the APU can monitor for the transfer completion bit in the scratch pad memory region 208. For example, the APU can periodically poll the appropriate location in memory to detect the setting of a corresponding bit (or set of bits). In some implementations, the software driver of the host system can be configured to set a flag indicating that the transfer has begun and clear the flag (or set a different flag) when the transfer completes. The software driver of the APU boot processor can detect when the transfer is completed. In response to detection of a completed transfer, the FSBL image can then be executed by the main processor.

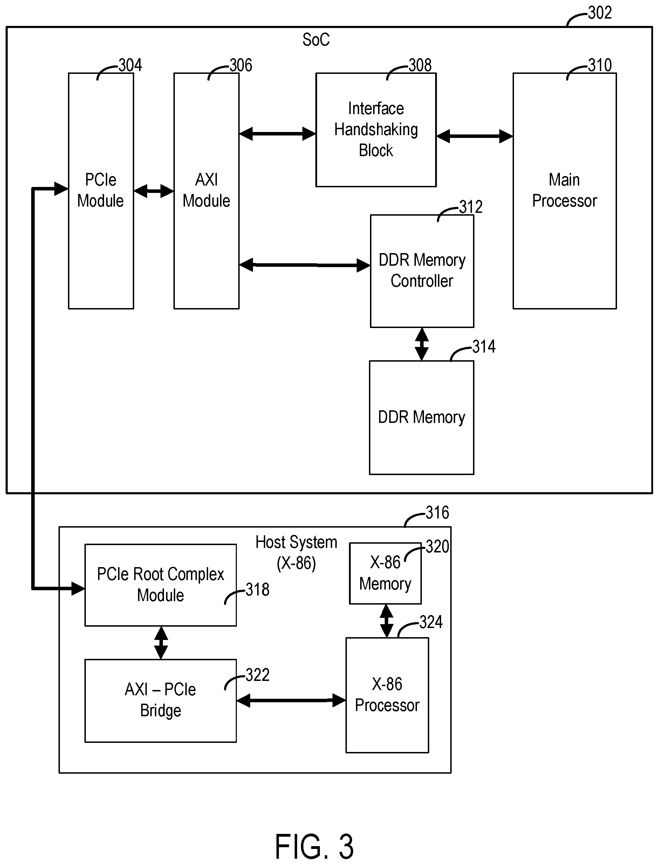

FIG. 3 depicts a block diagram of a system configured to perform SSBL or secondary boot over PCIe, consistent with implementations of the present disclosure. SoC 302 can be configured to transfer a second stage boot loader (SSBL) using PCIe. SoC 302 includes a main processor 310 with a main memory circuit (e.g., DDR memory) 314 that is accessible through a memory controller circuit 312. An AXI module 306 can include logic circuitry that is designed to allow the main processor to interface with various modules and devices. For instance, the AXI module circuit can function as an AXI-PCIe bridge that communicates with the PCIe module 304.

As discussed herein, the PCIe module 304 can be a soft interface that is implemented using programmable logic. For example, the FSBL can be loaded from a nonvolatile memory circuit of the SoC 302. The FSBL can include, or access, bitstream data that is used to program the programmable logic to include the PCIe module 304. Once the PCIe module 304 is properly setup in the programmable logic hardware, the FSBL can be configured to monitor for the transfer and completion of a SSBL. For example, the FSBL might execute a software driver that implements a handshake procedure that is discussed in more detail herein.

According to certain implementations, the FSBL and corresponding bitstream can also be configured to create the interface handshaking block 308 in the programmable logic of the SoC 302.

Consistent with various implementations, the SoC 302 can be configured to operate as a PCIe endpoint device that communicates with the host system 316. The host system 316 can be configured to operate as a host device. For instance, the host device in a PCIe architecture includes a PCIe root complex module 318. The local processor circuit 324 can communicate with different PCIe endpoint devices through an AXI-PCIe bridge 322 that connects to all the PCIe endpoint devices through the root complex module 318.

In a number of implementations, the system of FIG. 3 can be configured for use with a secondary boot image that can be loaded by a SoC-based application that is started after the system initialization is done by the First Stage Boot Loader (FSBL). The loading of the secondary boot image over PCIe or a similar bus can be useful for eliminating the need to flash the corresponding application (as a secondary boot image) along with FSBL. For instance, the secondary boot image (e.g., u-boot) can be initially stored in memory 320 of the Host system 316. The image can be parsed into double words (DW) by a software driver application running on the host system 316 and then transmitted over PCIe. The DWs can be written to a predefined location in the memory 314 by the AXI module 306. In some implementations, the AXI module can include a custom logic that implements an AXI memory-mapping protocol that uses a mapping into the memory 314 to store the data received as DWs over PCIe.

At the beginning of the transfer of the secondary boot image, the application running on the main processor 310 can provide an indication that the SoC 302 is ready to receive the secondary boot image. For instance, the application running on the main processor 310 can be configured to write to a data location (register) that is mapped to the interface handshaking block 308. For example, the data location can correspond to a data register that is accessible over PCIe and through the AXI module 306. To facilitate the accessibility of the data register, a portion of the PCIe space of the PCIe module 304 can mapped to the interface handshaking block 308. The software driver running on the host system 316 can poll for status of the SoC 302 by periodically reading from this memory mapped location. In response to detecting that the data register has been written to (which indicates that the SoC 302 is ready to receive the secondary boot image) the software driver of the host system 316 can be configured to begin transferring the secondary boot image to the SoC 302 using a PCIe link between the PCIe modules 304 and 318. When the transfer of the secondary boot image is complete, the software driver of the host system 316 can be configured to write to a memory location that is mapped to the interface handshaking block 308. The interface handshaking block 308 can respond to the data write by asserting an interrupt, or by storing data in a register that can be polled by the main processor 310. Main processor 310 can then begin executing the secondary boot image (e.g., a u-boot image).

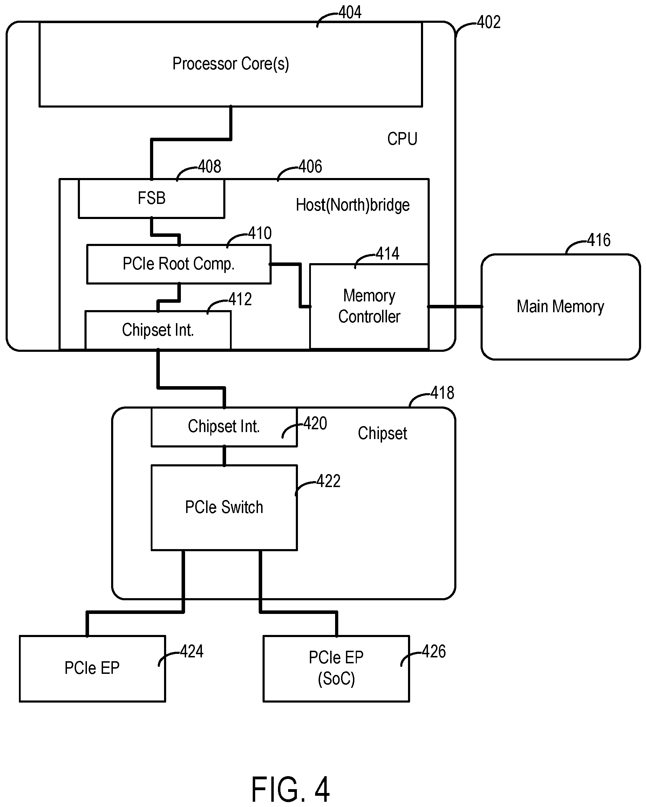

FIG. 4 depicts a system diagram of a computer system with PCIe components, consistent with various implementations. CPU 402 includes one or more processor cores 404. A host bridge 406 (sometimes referred to as North Bridge) facilitates communications between the processor cores and other system components and includes a front-side bus (FSB) module 408 that provides an interface to the processor cores. The host bridge 406 can be configured to function as the PCIe root complex (device/module) 410. The PCIe root complex module 410 connects the PCIe device tree to main memory 416, the processor cores 404, and to other devices, such as a graphics processing unit (GPU) (not shown). While the root complex can be implemented as part of a separate physical chip from the CPU, the root complex can also be integrated into the CPU chip. Main memory 416 can be accessed using a memory controller circuit 414.

In some implementations, a chipset interface module 412 can be used to communicate with the chipset 418 using a different communication protocol (e.g., a proprietary chipset protocol). A corresponding chipset interface module 420 can provide an interface between the chipset-specific communication protocol and one or more PCIe switches 422. A number of PCIe endpoint (EP) devices 424, 426 can be accessible through the PCIe switch. Each PCIe EP can be connected to the PCIe switch through a dedicated high-speed serial connection. In this manner, the system is configured using a point-to-point topology. Moreover, data can be transmitted using a packet-based protocol. For example, the CPU can execute a software driver that encapsulates data in a set of packets that specify a destination address that corresponds to a PCIe EP. The root complex, and each subsequent module in the transmission path, can receive the packets and identify a point-to-point connection (port) using a routing table and the destination address. The packet can be transmitted on the identified port so that it can be received by the next module in the transmission path.

Consistent with the various implementations discussed herein, one or more of the PCIe EP devices 424, 426 can be implemented using programmable ICs with the primary or secondary boot image transfer solutions discussed herein.

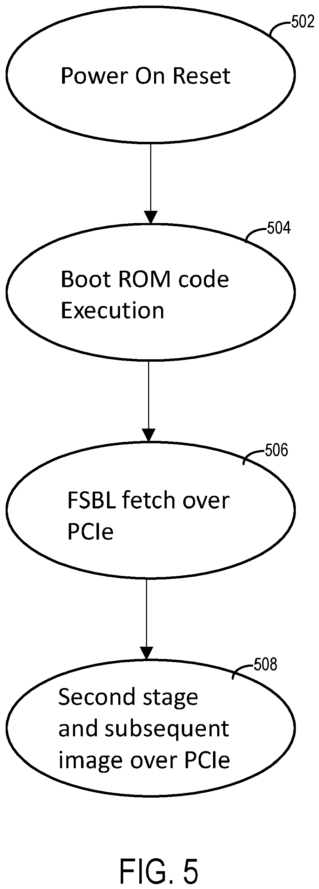

FIG. 5 depicts a flow diagram for use with a system for transferring FSBL images using a configuration serial data bus, consistent with certain implementations. The flow begins with a power on reset event, per block 502. The power on reset event can occur, for example, after a host system and a SoC endpoint device are provided with operating power. The host system can maintain a reset condition until it reaches a certain point within its boot cycle.

When the SoC endpoint device is released from the reset condition by the host system, it can retrieve and begin executing boot ROM code, per block 504. The boot ROM code can be stored, for instance, in a local nonvolatile memory circuit such as a flash memory circuit, a PROM, or similar storage circuit. Consistent with various implementations, the boot ROM can include instructions that are designed to manage the early boot process, e.g., by selecting the boot medium and loading the FSBL image. As discussed herein, the boot ROM code can include instructions that configure a local serial bus module or interface, such as a hard PCIe interface module. Accordingly, the FSBL image can be loaded using PCIe, or similar bus protocols, per block 506. The FSBL can carry out important early system initialization functions, such as setting the PLL coefficients. Subsequent information, including the SSBL can also be transferred using PCIe, per block 508.

Various bus protocols provide a number of different advantages for transferring FSBL and SSBL images. For instance, PCIe has a relatively fast data transfer rate (e.g., up to 20Gbps serial throughput for an x4Gen2 configuration) and, even with overhead of 8B/10B encoding, the effective throughput can be high (e.g., up to 16 Gbps). The use of a fast communication bus can provide for fast transfer times even for large boot images. PCIe also allows for the use of a quality of service (QoS) option that provides a guarantee on transfer time by providing priority to certain data transactions. The QoS option can therefore be enabled to provide a known latency in the boot image transfer timings. Moreover, PCIe scrambles serially transmitted characters and uses 8B/10B encoding. Scrambling the data can frustrate attempts to read the transmitted data by a third party, which might attempt to snoop bus transactions with an external probe, for example. Thus, the use of PCIe can provide security improvements. Moreover, the use of PCIe opens the door for remote upgrading of the transferred boot image. For instance, Ethernet interfaces can be used to update the image(s) of the host device. Upon a subsequent boot of the system, the newly updated image can be deployed. In certain implementations, the authenticity of an updated image can be verified using, for example, digital signatures, encryption, and other authentication solutions and combinations thereof.

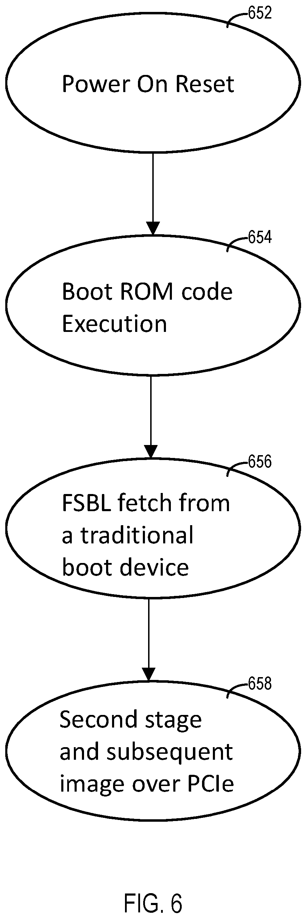

FIG. 6 depicts a flow diagram for use with a system for transferring secondary boot images using a configuration serial data bus, consistent with certain implementations. The flow diagram begins with a power on reset event occurring, per block 652. When the SoC endpoint device is released from the reset condition by the host system, it can retrieve and begin executing boot ROM code, per block 654. The ROM code can provide instructions (where and how) for retrieving the FSBL image, per block 656. For instance, the FSBL image can be retrieved from a local storage circuit (e.g., a flash memory circuit or a PROM memory circuit).

According to various implementations, the FSBL image can include instructions for configuring a local serial bus module or interface, such as a hard PCIe interface module of the SoC. Accordingly, the SSBL image can be loaded using PCIe, or similar bus protocols, per block 658. A particular example of a SSBL is u-boot. U-boot stands for "universal bootloader" and is an open source bootloader that can be used in embedded devices and for the purpose of booting an operating system, such as Linux.

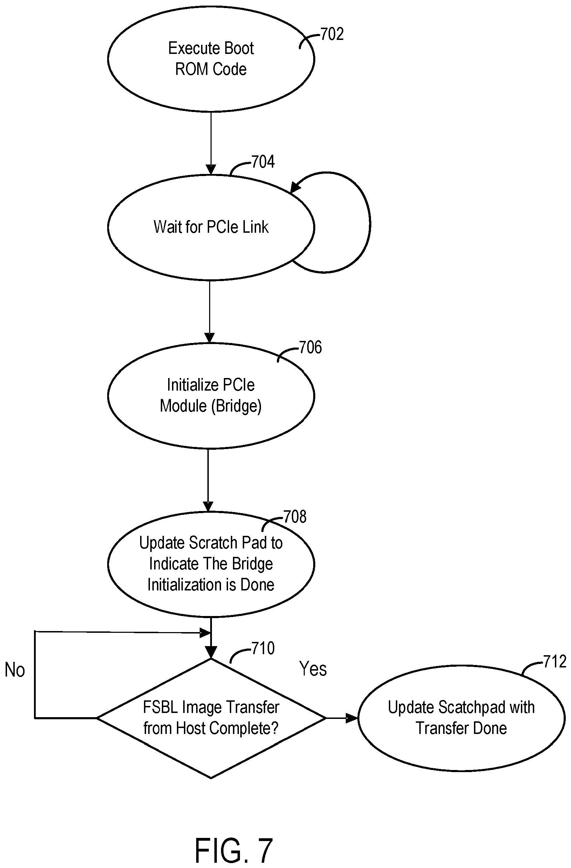

FIG. 7 depicts a flow diagram for a handshake process useful in the context of transferring FSBL images using a PCIe link, consistent with certain implementations. The boot ROM code can begin execution, per block 702. The boot ROM code can be loaded from a local storage circuit, and the execution of the boot ROM code can allow the SoC to have low-level aspects configured and to begin execution of an application that monitors, and waits for, a link to be established between a local PCIe module and a PCIe root complex of a host device, per block 704. The linking can occur once the host device has enumerated the PCIe endpoint devices in the system. The enumeration process includes defining addressing mapping that allows the PCIe endpoint devices and PCIe root complex module to communicate.

Once a link has been established, the PCIe modules of the system can be initialized and configured, per block 706. The process corresponding to block 706 can include the initialization and configuration of any PCIe bridges between the root complex and the memory and main processor of the endpoint device. For example, the PCIe bridges can have an address range that is mapped to a first portion of the local memory that is used as a scratch pad and another address range that is mapped to a second portion of the endpoint device that is used to store the FSBL image. Once the PCIe modules are initialized and properly configured, the main processor of the SoC endpoint device can update a location of the scratch pad memory that indicates the SoC endpoint device is ready to receive the FSBL image, per block 708.

An application/driver running on the host device can detect that the location of the scratch pad memory has been updated to indicate that the FSBL image can be transferred. As indicated by block 710, the driver can determine when the FSBL image transfer is complete. Upon determining that the FSBL image transfer is complete, the driver can update a second location within the scratch pad memory to indicate that the transfer has been completed, per block, 712. The FSBL image can then be executed by the SoC endpoint upon detecting the indication in the scratch pad memory. Additional images, such as an SSBL image, can be transferred using the same (or similar) process as described in connection with FIG. 7.

Various other implementations are directed toward a system that is configured to split the loading of configuration data (sometimes referred to as a configuration "bitstream") for a programmable IC (sometimes referred to as a PLD IC), into two different stages. Splitting the loading into two different stages can allow for the programmable IC to meet time-to-availability requirements during configuration. Moreover, the transfer for second stage configuration data can be facilitated using direct memory access (DMA) transfers, as discussed in more detail herein. DMA transfers involve access to main memory used by a central processing unit (CPU) that is independent of the CPU (e.g., without individual read or write commands from the CPU to the main memory and to the PLD IC). For example, the CPU can execute device driver software that sends a memory access command to a DMA engine, which then takes care of accessing main memory and transferring the accessed data to the programmable IC.

In certain implementations, the first stage can contain sufficient configuration data to establish a bus interface module that is designed to interface with a host device over a communication bus that links multiple devices together. An internal configuration access interface can also be included to provide an interface between the bus interface module and programmable logic of the programmable IC. The system is configured to then load the remaining configuration data using DMA transfers through the bus interface module. In this manner, the second set of configuration data can be moved directly between a main memory circuit and the programmable IC with low CPU utilization. The programmable logic of the PLD can then be further configured using the second set of configuration data.

According to various implementations, the bus interface module can be configured to communicate using a high speed serial bus protocol that is based upon a point-to-point topology and a packet-based protocol. A point-to-point topology can use a number of dedicated connections between devices, while a shared bus topology can use connections that are shared with three or more devices. Packet-based communication protocols allow for data to be transmitted in separate (small) blocks to a destination specified in each packet. As might be necessary, the packets for a particular communication stream can be reassembled upon receipt at the destination.

A particular example of a point-to-point topology that uses packets is Peripheral Component Interconnect Express (PCIe). For ease of discussion, various implementations will be discussed in the context of PCIe; however, it is understood that other protocols, topologies, and configurations are also possible.

In certain implementations, the size of the configuration data for the first stage is kept small enough to meet an initial, desired configuration timing. For instance, the PCIe specification includes a requirement that PCIe compliant endpoint devices meet a 100 ms boot time. In various instances, the first set of configuration data can be stored in a memory circuit that is accessible over a default/configuration interface of the programmable IC (PLD/FPGA). This interface can be implemented using circuitry in the programmable IC that is available upon power-up and without first being configured. For instance, the first set of configuration data can be stored in a persistent memory circuit, such as a flash memory circuit. Accordingly, the size of the configuration data for the first stage can be kept small enough to allow the configuration data to be loaded using the hard interface and the programmable IC to be configured to be available on the bus within the desired time (e.g., 100 ms).

Consistent with certain implementations, the programmable IC can include an internal configuration access interface that is designed to interface between the bus interface module and programmable logic of the programmable IC. This internal configuration access interface can be integrated with the bus interface to provide access to the configuration logic of the programmable IC. While, in some instances, the internal configuration access interface can be configured to transfer the second stage configuration data using configuration memory writes (controlled by a device driver) to the programmable IC. The configuration data is written in many different write commands that each originate with the CPU. The write commands can use valuable host processor time and can still take a significant amount of time to complete the entire data transfer. Particular aspects of various implementations are directed toward a system that is configured to use DMA transfers for the second stage transfer, as opposed to using configuration memory writes of similar mechanisms. This can be particularly useful for reducing, or eliminating, the processor load and for increasing the speed of second stage transfer.

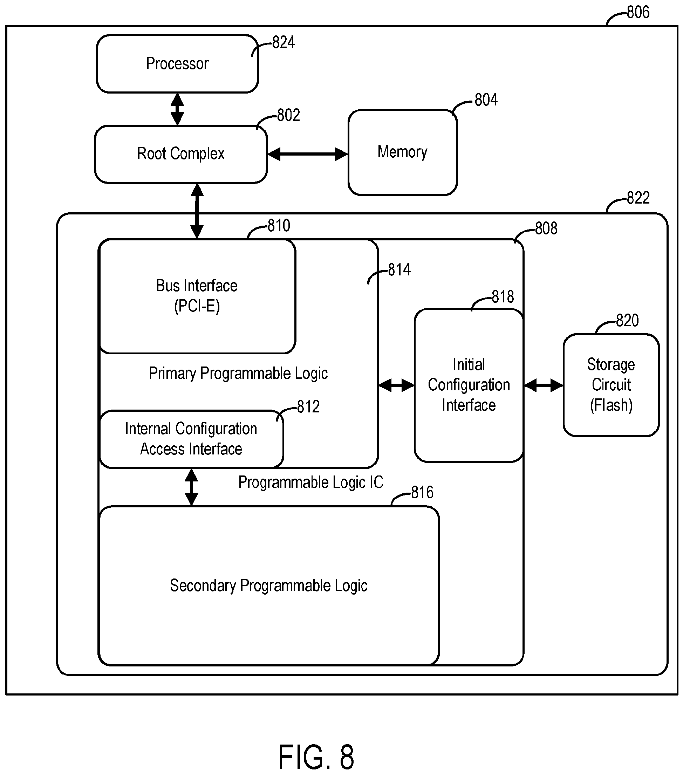

FIG. 8 depicts a block diagram of a system for transferring configuration data using DMA, consistent with certain implementations. The system 806 can include an (PCIe) endpoint card 822, which can have a programmable IC 808 that is configured to load a first stage of configuration data from a storage circuit 820. Storage circuit 820 can be implemented as a PROM (programmable read-only memory), flash memory, or another type of memory circuit. An initial (storage) configuration interface 818 can be configured to retrieve the configuration data from the storage circuit 820 in order to configure a first portion of the programmable logic of the programmable IC.

As discussed herein, the data transfer rate for the initial configuration process can be insufficient to transfer all of the configuration data for a programmable IC within a desired time (e.g., 100 ms for a PCIe endpoint device). Thus, the configuration data can be partitioned into two or more stages to allow for configuration of corresponding logic at different times. For instance, a first stage of configuration data can include data for configuring a portion of the programmable logic identified as primary programmable logic 814. Primary programmable logic 814 can include, but is not necessarily limited to, a bus interface module 810 and an internal configuration access interface 812. In certain implementations, the bus interface module 810 can be configured to use a point-to-point link with a host device that includes a root complex 802, a processor circuit 824 and memory circuit 804. In particular implementations, the point-to-point link uses the PCIe protocol to communicate with the host device via the root complex 802.

Memory circuit 804 can store (secondary) configuration data for configuring secondary programmable logic 816. This secondary configuration data can be accessed using the bus interface module 810 using DMA transfers. For a PCIe protocol, the DMA transfers can be facilitated by using root complex 802 as a DMA-capable bus master that directly accesses the memory circuit 804. In particular implementations and as explained in more detail herein, the host device can function as the root complex device of a PCIe device tree. The DMA transfers can also be facilitated by designing the bus interface module 810 with a DMA engine that allows the bus interface module 810 to serve as a bus master that implements DMA transfers to the memory circuit 804. Device driver software can facilitate the DMA transfers by configuring and identifying physical addresses for buffers used for the DMA transfers. In the PCIe context, this can include identifying and using BAR-mapped register(s) of the bus interface module 810.

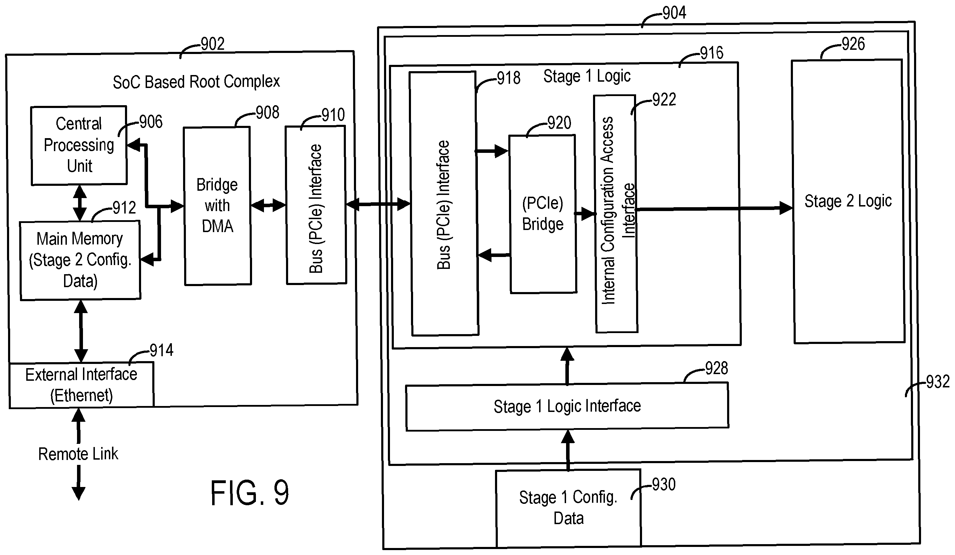

FIG. 9 depicts a block diagram for a system with a system-on-chip (SoC) used as a root complex that includes DMA capabilities, consistent with implementations discussed herein. A (PCIe) endpoint card 904 can include a programmable IC (FPGA) 932. The programmable IC 932 can include a stage 1 (programmable) logic interface 928. Stage 1 logic interface 928 can be designed to access and load stage 1 configuration data for the purpose of configuring stage 1 logic 916. Upon initialization (e.g., power-on) of the programmable IC 932, the stage 1 logic interface begins retrieving the stage 1 configuration data 930. The stage 1 configuration data can be stored in the programmable IC 932 (e.g., as internal non-volatile memory) or on a separate IC 930 (e.g., as an external non-volatile memory circuit). The size of the stage 1 configuration data can be kept relatively small, so as to allow for the loading and subsequent configuration to be carried out within a predetermined time (e.g., 100 ms for PCIe).

After configuration of the corresponding programmable logic, stage 1 logic 916 can include a bus interface module 918, which can be configured to use, for example, PCIe. The stage 1 logic 916 can also be configured to include a stage 2 internal configuration access interface 922 between the bus interface module 918 and the programmable logic. Data received over the two interfaces can then be used to program stage 2 logic 926. In some instances, a bridge 920 can be implemented between the bus interface module 918 to provide an interface between communication protocols that are used on either side of the bridge. A PCIe interface 910 can be configured to communicate with the bus interface module 918.

In some implementations, SoC 902 can be configured to function as a host device with a PCIe root complex of the system. A CPU 906 can be configured to access main memory 912 during normal operation. Main memory 912 can also be configured to be accessible by bridge 908, which includes a DMA engine that is configured to use DMA transactions to main memory 912. This can allow the SoC 902 to retrieve stage 2 configuration data directly from the main memory without burdening the CPU 906 with read and write requests to the main memory and other devices.

According to some implementations, the stage 2 configuration data can be provided from an external interface 914 (e.g., using Ethernet). In particular implementations, the stage 1 logic 916 can be configured to allow for reconfiguration of the stage 2 logic 926. Accordingly, the programmable IC 932 could be configured to allow remote upgrades to the stage 2 logic 926. For example, the stage 1 logic 916 can be configured to respond to a particular communication by (re)entering a configuration mode during which stage 2 configuration logic is received using DMA transfers. The stage 2 logic 916 can then be configured according to the newly-received configuration data. 308

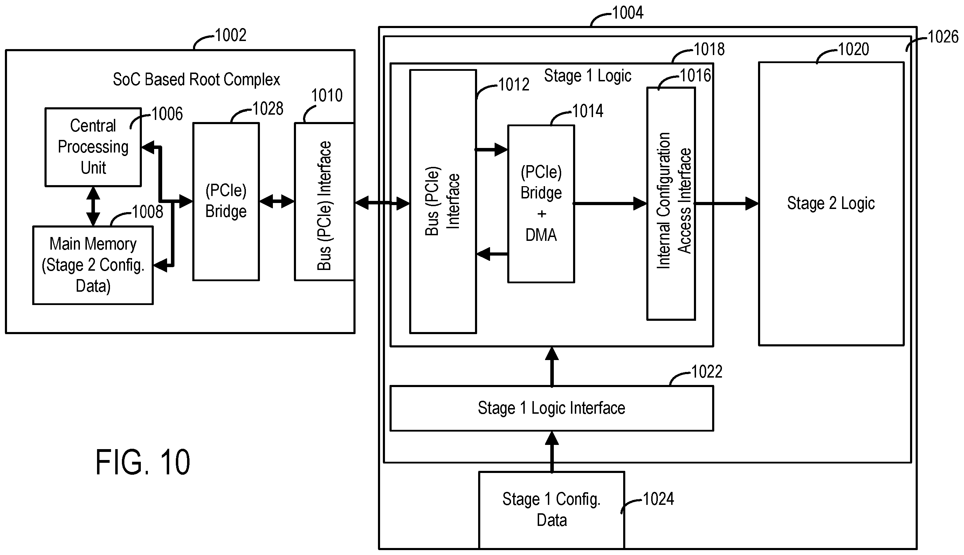

FIG. 10 depicts a block diagram for a system with stage 1 logic configured with DMA capabilities, consistent with implementations discussed herein. Similar to the discussion in FIG. 9, (PCIe) endpoint card 1004 can include a programmable IC 1026. The programmable IC 1026 can include a stage 1 (programmable) logic interface 1022. The stage one programmable logic interface 1022 can be designed to access and load stage 1 configuration data 1024 for the purpose of configuring stage 1 (programmable) logic 1018. Upon initialization (e.g., power-on) of the programmable IC 1026, the stage 1 logic interface 1022 begins retrieving the stage 1 configuration data 1024. The stage 1 configuration data 1024 can be stored on the programmable IC 1026 (e.g., as internal non-volatile memory) or on a separate IC (e.g., as an external non-volatile memory IC). The size of the stage 1 configuration data 1024 can be kept relatively small, so as to allow for the loading and subsequent configuration to be carried out within a predetermined time (e.g., 100 ms for PCIe).

After configuration of the corresponding programmable logic, stage 1 logic 1018 can include a bus interface module 1012, which can be configured to use, for example, PCIe. The stage 1 logic 1018 can also be configured to include an internal configuration access interface 1016 between the bus interface module 1012 and the remaining programmable logic, which can then be used to program stage 2 logic 1020. Bridge 1014 can be designed to provide an interface between communication protocols that are used on either side of the bridge and also to function as a DMA engine that can function as a bus master for the purposes of initiating DMA transfers from main memory. Bridge 1028 can be designed to provide a similar interface on the SoC 1002.

According to certain implementations, the DMA configuration registers can be mapped to any BAR (Base Address Register) of PCIe End Point and the host CPU can access those registers through the BAR. In this manner, the SoC 1002 does not need to be configured to provide the functionality of a DMA engine. The stage 1 logic 1018 can be configured to directly access the main memory circuit 1008 through bus (PCIe) interface module 1010 independently from the CPU 1006.

Consistent with various implementations, the DMA engine can be configured and managed by a software device driver. For instance, the device driver can generate commands that are sent to the DMA engine and that relate to a memory mapping for a particular memory region relative to the operating system being used. This command can be, for example, a read command with source-address, destination-address, and length. This can be done by configuring the DMA engine with the required information through BARs. The DMA engine can be setup by a software driver to carry out the DMA transfers for a task associated with the second stage configuration data.

Depending on the size of the second configuration data and also the number of bytes the DMA engine can transfer in one transaction, the device driver will setup DMA to transfer the configuration data in multiple chunks. The configuration data can be scattered in the host PC main memory and the DMA can therefore be setup appropriately by the software driver so that it can fetch the configuration data from the different locations.

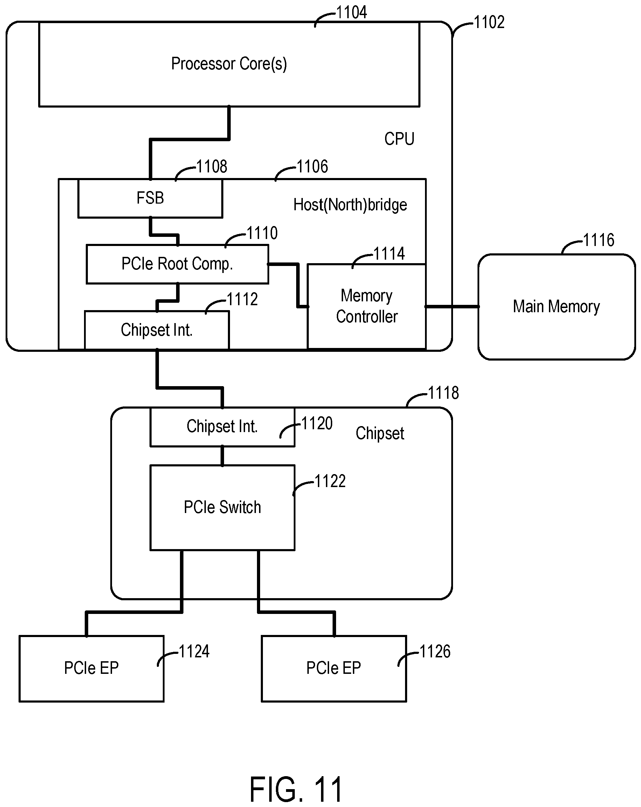

FIG. 11 depicts a system diagram of a computer system with PCIe components, consistent with various implementations. CPU 1102 includes one or more processor cores 1104. A host bridge 1106 (sometimes referred to as North Bridge) facilitates communications between the processor cores and other system components and includes a front-side bus (FSB) module 1108 that provides an interface to the processor cores. The host bridge 1106 can be configured to function as the PCIe root complex (device/module) 1110. The PCIe root complex 1110 connects the PCIe device tree to main memory 1116, the processor cores 1104, and to other devices, such as a graphics processing unit (GPU) (not shown). While the root complex can be implemented as part of a separate physical chip from the CPU, the root complex can also be integrated into the CPU chip. Main memory 1116 can be accessed using a memory controller circuit 1114.

In some implementations, a chipset interface module 1112 can be used to communicate with the chipset 1118 using a different communication protocol (e.g., a proprietary chipset protocol). A corresponding chipset interface module 1120 can provide an interface between the chipset-specific communication protocol and one or more PCIe switches 1122. A number of PCIe endpoint (EP) devices 1124, 1126 can be accessible through the PCIe switch. Each PCIe EP can be connected to the PCIe switch through a dedicated high-speed serial connection. In this manner, the system is configured using a point-to-point topology. Moreover, data can be transmitted using a packet-based protocol. For example, the CPU can execute a software driver that encapsulates data in a set of packets that specify a destination address that corresponds to a PCIe EP. The root complex, and each subsequent module in the transmission path, can receive the packets and identify a point-to-point connection (port) using a routing table and the destination address. The packet can be transmitted on the identified port so that it can be received by the next module in the transmission path.

Consistent with the various implementations discussed herein, one or more of the PCIe EP devices 1124, 1126 can be implemented using programmable ICs with a second configuration stage that uses DMA transfers to access secondary configuration data from main memory 1116. In this manner, the CPU does not need to initiate each transfer as data can be accessed direction from memory through the root complex.

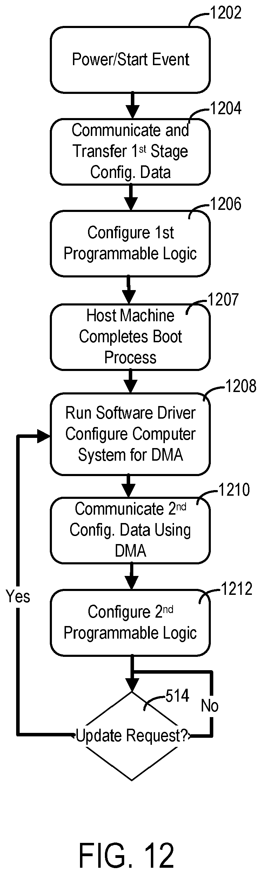

FIG. 12 depicts a flow diagram for use with a system for transferring configuration data using DMA, consistent with certain implementations. The flow begins with the occurrence of a start event, per block 1202. The start event can be (but is not limited to) power-up of the programmable IC and the host machine. For example, a system that uses PCIe may power the host machine and the PCIe endpoints from same power source, such that they are both brought up at nearly the same time. The host machine can release PCIe endpoints from reset and then expect the PCIe endpoints to be available within a set amount of time (e.g., 100ms thereafter).

In response to the powerup/start event, the initial (first stage) configuration data can then be communicated to the programmable IC over a first stage programmable logic interface, per block 1204. As discussed herein, this can include reading the configuration data from a non-volatile memory, such as a flash memory circuit, a PROM, or similar storage circuit. In certain implementations, the first stage bitstream loaded in block 1206 can be kept relatively small so as to allow the configuration of the PCIe interface module within 100ms after reset is released to the PCIe endpoint. Meeting this timing allows for the PCIe interface module to be enumerated without a subsequent reboot or reset.

The first stage configuration data is used to program a first portion of the programmable logic within the programmable IC, per block 1206. This first portion can include a bus interface module. In particular implementations, the bus interface module can be a PCIe interface module designed to interface with a computer system and to appear to the computer system as a PCIe endpoint device.

The host machine (or SoC board) can carry out, and complete, its boot process, per block 1207. The boot process can, for instance, include configuration of the endpoint devices and loading of the operating system. In PCIe, the configuration of the endpoint devices is sometimes referred to as enumeration. During enumeration, each PCIe endpoint device is detected and assigned an address space. Thus, if a particular PCIe endpoint device is not yet available when enumeration begins, it may not be assigned an address space. The host machine could be reset to allow enumeration to reoccur, but this can result in significant delays due to the extra boot time. As discussed herein, the PCIe specification allows for 100ms between when the reset state is removed and when an endpoint should be available for enumeration. The use of a small 1^{st} stage configuration data can be particularly useful for meeting such requirements.

Once the host machine completes the boot process, the computer system can next execute or run a software driver that is configured to setup the computer system for DMA transfers that access second stage configuration data from the main memory of the computer system, per block 1208. As discussed herein, the DMA engine can be located within the PCIe interface module of the programmable IC or within the PCIe root complex. In either situation, a software driver module, with runs on the host computer system, can configure the DMA engine and initiate the DMA transfers. This can include setting the PCIe DMA engine as a bus master and identifying a buffer address for the DMA transfers. The configuration of the DMA engine can include setting up a Buffer Descriptor chain that contains information about the buffer address and size of the DMA transfer for the second stage configuration data.

Once configured, the stage two configuration data can be transferred to the programmable IC using DMA transfers from the main memory of the computer system, as indicated by block 1210. A second portion of the programmable logic can then be configured using the stage two configuration data, per block 1212.

Consistent with some embodiments, the second portion of the programmable logic can be updated while the programmable IC is operating (e.g., after the second portion is programmed and without requiring shutting down and reconfiguration of the first portion of the programmable logic). The computer system can determine whether or not an update request has been received, per block 1214. The update request might originate from an external location, such as over an Ethernet connection. This can allow, for example, remote updates to be pushed to programmable ICs over the Internet. If there is an update request, then the DMA transfer flow indicated by blocks 1208 through 1212 can be repeated for the new/updated second stage configuration data.

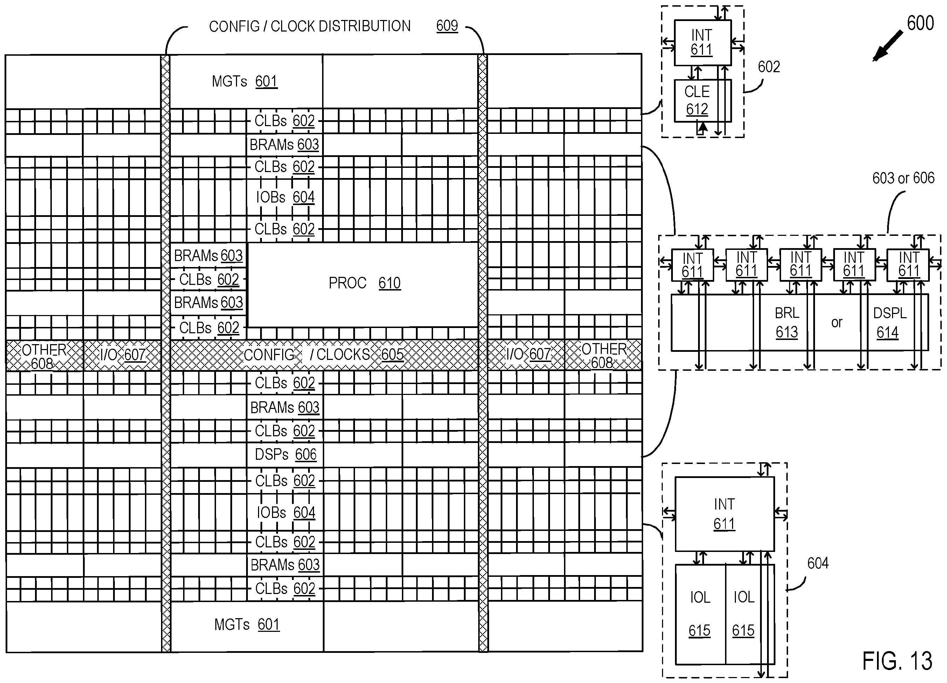

FIG. 13 shows a programmable integrated circuit (IC) 600 on which the disclosed circuits and processes may be implemented. The programmable IC may also be referred to as a System-on-Chip (SOC) that includes field programmable gate array logic (FPGA) along with other programmable resources. FPGA logic may include several different types of programmable logic blocks in the array. For example, FIG. 13 illustrates programmable IC 600 that includes a large number of different programmable tiles including multi-gigabit transceivers (MGTs) 601, configurable logic blocks (CLBs) 602, random access memory blocks (BRAMs) 603, input/output blocks (lOBs) 604, configuration and clocking logic (CONFIG/CLOCKS) 605, digital signal processing blocks (DSPs) 606, specialized input/output blocks (I/O) 607, for example, clock ports, and other programmable logic 608 such as digital clock managers, analog-to-digital converters, system monitoring logic, and so forth. Some programmable IC having FPGA logic also include dedicated processor blocks (PROC) 610 and internal and external reconfiguration ports (not shown).

In some FPGA logic, each programmable tile includes a programmable interconnect element (INT) 611 having standardized connections to and from a corresponding interconnect element in each adjacent tile. Therefore, the programmable interconnect elements taken together implement the programmable interconnect structure for the illustrated FPGA logic. The programmable interconnect element INT 611 also includes the connections to and from the programmable logic element within the same tile, as shown by the examples included at the top of FIG. 13.

For example, a CLB 602 can include a configurable logic element CLE 612 that can be programmed to implement user logic, plus a single programmable interconnect element INT 611. A BRAM 603 can include a BRAM logic element (BRL) 613 in addition to one or more programmable interconnect elements. Typically, the number of interconnect elements included in a tile depends on the height of the tile. In the pictured implementation, a BRAM tile has the same height as five CLBs, but other numbers (e.g., four) can also be used. A DSP tile 606 can include a DSP logic element (DSPL) 614 in addition to an appropriate number of programmable interconnect elements. An IOB 604 can include, for example, two instances of an input/output logic element (IOL) 615 in addition to one instance of the programmable interconnect element INT 611. As will be clear to those of skill in the art, the actual I/O bond pads connected, for example, to the I/O logic element 615, are manufactured using metal layered above the various illustrated logic blocks, and typically are not confined to the area of the input/output logic element 615.

In the pictured implementation, a columnar area near the center of the die (shown shaded in FIG. 13) is used for configuration, clock, and other control logic. Horizontal areas 609 extending from the column are used to distribute the clock signal and configuration signals across the breadth of the programmable IC. Note that the references to "columnar" and "horizontal" areas are relative to viewing the drawing in a portrait orientation.

Some programmable ICs utilizing the architecture illustrated in FIG. 13 include additional logic blocks that disrupt the regular columnar structure making up a large part of the programmable IC. The additional logic blocks can be programmable blocks and/or dedicated logic. For example, the processor block PROC 610 shown in FIG. 13 spans several columns of CLBs and BRAMs.

Note that FIG. 13 is intended to illustrate only an example programmable IC architecture. The numbers of logic blocks in a column, the relative widths of the columns, the number and order of columns, the types of logic blocks included in the columns, the relative sizes of the logic blocks, and the interconnect/logic implementations included at the top of FIG. 13 are merely an example. For example, in an actual programmable IC, more than one adjacent column of CLBs is typically included wherever the CLBs appear, to facilitate the efficient implementation of user logic.

For the various flow diagrams depicted herein, the particular orders of the blocks and associated functions are provided as examples. The ordering is not necessarily limiting and can be varied according to various implementations.

Those skilled in the art will appreciate that various alternative computing arrangements, including one or more processors and a memory arrangement configured with program code, would be suitable for hosting the processes and data structures that may carry out functions disclosed herein. In addition, the processes may be provided via a variety of computer-readable storage media or delivery channels such as magnetic or optical disks or tapes, electronic storage devices, or as application services over a network.

Though aspects and features may in some cases be described in individual figures, it will be appreciated that features from one figure can be combined with features of another figure even though the combination is not explicitly shown or explicitly described as a combination.

The methods and system are thought to be applicable to a variety of systems that use RAM circuits. Other aspects and features will be apparent to those skilled in the art from consideration of the specification. The portions of the methods and system may be implemented as one or more processors configured to execute software, as an application specific integrated circuit (ASIC), or as a logic on a programmable logic device. Moreover, the various circuits identified herein may share hardware circuitry, such as use a common computer processing unit or digital processing unit. It is intended that the specification and drawings be considered as examples only, with a true scope of the invention being indicated by the following claims.

## Claims

1. A method for booting a system-on-chip, SoC (102), that includes at least one processor circuit, the method comprising:
configuring a communication bus by means of a hard I/O interface module (114) which is implemented using circuitry in the SoC (102) that is available upon power up;
loading a boot read only memory, ROM, image over the communication bus;
executing the boot read only memory, ROM, image to instruct the SoC (102) to receive a first boot image over the communication bus;
receiving, using a storage interface circuit (104) of the SoC (102), the first boot image from a nonvolatile memory chip;
configuring, by executing the first boot image on a processor circuit (110) of the SoC (102), a soft bus interface module that is designed to communicate with a host device (118) over the communication bus that links multiple devices to the SoC (102),
wherein configuring the soft bus interface module includes programming, using bitstream data, the programmable logic (112) of the SoC (102) to implement the soft bus interface module ;
communicating, using the soft bus interface module, a second boot image from a memory (120) of the host device (118) to a memory of the SoC (102); and
booting the SoC (102) by executing the second boot image.

2. The method of claim 1, wherein the soft bus interface module is further designed to communicate with the host device (118) using a packet-based protocol and over a point-to-point link between the host device (118) and the SoC (102) and wherein the packet-based protocol defines packets that encapsulate data and specify a destination address.

3. The method of claim 1, further comprising implementing a handshake protocol with the host device (118) to provide the second boot image and the processor circuit of the SoC (102).

4. The method of claim 1, wherein the communication bus is a Peripheral Component Interconnect Express, PCIe, communication bus and wherein the SoC (102) includes programmable logic tiles.

5. The method of claim 4, wherein configuring the soft bus interface module includes enumerating the soft bus interface module for communication with a root complex module of the host device (118).

6. The method of claim 5, further comprising setting a value in scratch pad memory space in response to completion of the enumeration of the soft bus interface module.

7. The method of claim 1, wherein the first boot image is a boot read only memory (ROM) image and the second boot image is a First Stage Boot Loader (FSBL) image or wherein the first boot image is a First Stage Boot Loader (FSBL) image and the second boot image is a Second Stage Boot Loader (SSBL) image.

8. A system comprising:
a system-on-chip, SoC (102), that includes:
programmable logic (112);
a storage interface circuit (104) configured to receive a first boot image from a nonvolatile memory chip;
a hard I/O interface module (114) which is implemented using circuitry in the SoC (102) that is available upon power up; and
a processor circuit configured to:
configure a communication bus by means of the hard I/O interface module (114);
execute a boot read only memory, ROM, image to instruct the SoC (102) to receive the first boot image over the communication bus;
execute the first boot image to:
program, using bitstream data, the programmable logic (112) to implement a soft bus interface module that is configured to communicate with a host device (118) over the communication bus that links multiple devices to the SoC (102); and
configure the soft bus interface module to transfer a second boot image from a memory of the host device (118) to the SoC (102); and
boot the SoC (102) by executing the second boot image.

9. The system of claim 8, wherein the soft bus interface module is further designed to communicate with the host device (118) using a packet-based protocol and over a point-to-point link between the host device (118) and the SoC (102) and wherein the packet-based protocol defines packets that encapsulate data and specify a destination address.

10. The system of claim 8, wherein the processor circuit is further configured to implement a handshake protocol with the host device (118) providing the second boot image.

11. The system of claim 10, wherein the storage interface circuit (104) is further configured to load the boot read only memory, ROM, image; and
wherein the boot ROM image includes instructions for the SoC (102) to perform the receiving of the first boot image from the nonvolatile memory chip.

12. The system of claim 8, wherein the communication bus is a Peripheral Component Interconnect Express, PCIe, communication bus and wherein the SoC (102) includes programmable logic tiles and wherein the processor circuit is configured to configure the soft bus interface module as part of an enumeration process for the PCIe communication bus.

13. The system of claim 12, wherein the processor circuit is configured to set a value in scratch pad memory space in response to completion of the enumeration of the bus interface module.

14. The system of claim 8, wherein the first boot image is a First Stage Boot Loader (FSBL) image and the second boot image is a Second Stage Boot Loader (SSBL) image.

## Patentansprüche

1. Verfahren zum Booten eines System-on-Chip, SoC (102), das mindestens eine Prozessorschaltung aufweist, wobei das Verfahren umfasst:
Konfigurieren eines Kommunikationsbusses mittels eines Hard-E/A-Schnittstellenmoduls (114), das unter Verwendung von Schaltkreisen im SoC (102) implementiert ist, die beim Hochlaufen verfügbar sind;
Laden eines Boot-Festwertspeicher-Abbilds, ROM-Abbilds, über den Kommunikationsbus;
Ausführen des Boot-Festwertspeicher-Abbilds, ROM-Abbilds, um das SoC (102) anzuweisen, ein erstes Boot-Abbild über den Kommunikationsbus zu empfangen;
Empfangen, unter Verwendung einer Speicherschnittstellenschaltung (104) des SoC (102), des ersten Boot-Abbilds von einem nichtflüchtigen Speicherchip;
Konfigurieren, durch Ausführen des ersten Boot-Abbilds auf einer Prozessorschaltung (110) des SoC (102), eines Soft-Bus-Schnittstellenmoduls, das ausgelegt ist zum Kommunizieren mit einer Host-Vorrichtung (118) über den Kommunikationsbus, der mehrere Vorrichtungen mit dem SoC (102) verbindet,
wobei das Konfigurieren des Soft-Bus-Schnittstellenmoduls das Programmieren der programmierbaren Logik (112) des SoC (102) unter Verwendung von Bitstromdaten aufweist, um das Soft-Bus-Schnittstellenmodul zu implementieren;
Kommunizieren, unter Verwendung des Soft-Bus-Schnittstellenmoduls, eines zweiten Boot-Abbilds von einem Speicher (120) der Hostvorrichtung (118) an einen Speicher des SoC (102); und
Booten des SoC (102) durch Ausführen des zweiten Boot-Abbilds.

2. Verfahren nach Anspruch 1, wobei das Soft-Bus-Schnittstellenmodul ferner ausgelegt ist zum Kommunizieren mit der Hostvorrichtung (118) unter Verwendung eines paketbasierten Protokolls und über eine Punkt-zu-Punkt-Verbindung zwischen der Hostvorrichtung (118) und dem SoC (102) und wobei das paketbasierte Protokoll Pakete definiert, die Daten kapseln und eine Zieladresse spezifizieren.

3. Verfahren nach Anspruch 1, ferner umfassend das Implementieren eines Handshake-Protokolls mit der Hostvorrichtung (118), um das zweite Boot-Abbild und die Prozessorschaltung des SoC (102) bereitzustellen.

4. Verfahren nach Anspruch 1, wobei der Kommunikationsbus ein Peripheral Component Interconnect Express-Kommunikationsbus, PCIe-Kommunikationsbus, ist und wobei das SoC (102) programmierbare Logikkacheln aufweist.

5. Verfahren nach Anspruch 4, wobei das Konfigurieren des Soft-Bus-Schnittstellenmoduls das Aufzählen des Soft-Bus-Schnittstellenmoduls zur Kommunikation mit einem Root-Komplex-Modul der Hostvorrichtung (118) aufweist.

6. Verfahren nach Anspruch 5, das ferner das Setzen eines Wertes im Scratchpad-Speicherplatz als Reaktion auf den Abschluss des Aufzählens des Soft-Bus-Schnittstellenmoduls umfasst.

7. Verfahren nach Anspruch 1, wobei das erste Boot-Abbild ein Boot-Festwertspeicher-Abbild (ROM-Abbild) ist und das zweite Boot-Abbild ein First Stage Boot Loader-Abbild (FSBL-Abbild) ist oder wobei das erste Boot-Abbild ein First Stage Boot Loader-Abbild (FSBL-Abbild) ist und das zweite Boot-Abbild ein Second Stage Boot Loader-Abbild (SSBL-Abbild) ist.

8. System, umfassend:
ein System-on-Chip, SoC (102), das aufweist:
programmierbare Logik (112);
eine Speicherschnittstellenschaltung (104), die konfiguriert ist zum Empfangen eines ersten Boot-Abbilds von einem nichtflüchtigen Speicherchip;
ein Hard-E/A-Schnittstellenmodul (114), das unter Verwendung von Schaltkreisen im SoC (102) implementiert ist, die beim Hochlaufen verfügbar sind; und
eine Prozessorschaltung, die konfiguriert ist zum:
Konfigurieren eines Kommunikationsbusses mittels des Hard-E/A-Schnittstellenmoduls (114);
Ausführen eines Boot-Festwertspeicher-Abbild, ROM-Abbilds, um das SoC (102) anzuweisen, das erste Boot-Abbild über den Kommunikationsbus zu empfangen;
Ausführen des ersten Boot-Abbilds zum:
Programmieren, unter Verwendung von Bitstromdaten, der programmierbaren Logik (112), um ein Soft-Bus-Schnittstellenmodul zu implementieren, das konfiguriert ist zum Kommunizieren mit einer Hostvorrichtung (118) über den Kommunikationsbus, der mehrere Vorrichtungen mit dem SoC (102) verbindet; und
Konfigurieren des Soft-Bus-Schnittstellenmoduls, um ein zweites Boot-Abbild von einem Speicher der Hostvorrichtung (118) zu dem SoC (102) zu übertragen; und
Starten des SoC (102) durch Ausführen des zweiten Boot-Abbilds.

9. System nach Anspruch 8, wobei das Soft-Bus-Schnittstellenmodul ferner ausgelegt ist zum Kommunizieren mit der Hostvorrichtung (118) unter Verwendung eines paketbasierten Protokolls und über eine Punkt-zu-Punkt-Verbindung zwischen der Hostvorrichtung (118) und dem SoC (102) und wobei das paketbasierte Protokoll Pakete definiert, die Daten kapseln und eine Zieladresse spezifizieren.

10. System nach Anspruch 8, wobei die Prozessorschaltung ferner konfiguriert ist zum Implementieren eines Handshake-Protokolls mit der Hostvorrichtung (118), die das zweite Boot-Abbild bereitstellt.

11. System nach Anspruch 10, wobei die Speicherschnittstellenschaltung (104) ferner konfiguriert ist zum Laden des Boot-Festwertspeicher-Abbilds, ROM-Abbilds; und
wobei das Boot-ROM-Abbild Anweisungen für das SoC (102) zum Durchführen des Empfangens des ersten Boot-Abbilds von dem nichtflüchtigen Speicherchip aufweist.

12. System nach Anspruch 8, wobei der Kommunikationsbus ein Peripheral Component Interconnect Express-Kommunikationsbus, PCIe-Kommunikationsbus, ist und wobei das SoC (102) programmierbare Logikkacheln aufweist und wobei die Prozessorschaltung konfiguriert ist zum Konfigurieren des Soft-Bus-Schnittstellenmoduls als Teil eines Aufzählungsprozesses für den PCIe-Kommunikationsbus.

13. System nach Anspruch 12, wobei die Prozessorschaltung konfiguriert ist zum Einstellen eines Werts im Scratchpad-Speicherplatz als Reaktion auf den Abschluss der Aufzählung des Busschnittstellenmoduls.

14. System nach Anspruch 8, wobei das erste Boot-Abbild ein First Stage Boot Loader-Abbild (FSBL-Abbild) und das zweite Boot-Abbild ein Second Stage Boot Loader-Abbild (SSBL-Abbild) ist.

## Revendications

1. Procédé d'amorçage d'un système sur puce, SoC (102), qui inclut au moins un circuit processeur, le procédé comprenant :
la configuration d'un bus de communication au moyen d'un module d'interface E/S matériel (114) qui est implémenté en utilisant un système de circuit dans le SoC (102) qui est disponible au démarrage ;
le chargement d'une image de mémoire morte, ROM, d'amorçage sur le bus de communication ;
l'exécution de l'image de mémoire morte, ROM, d'amorçage pour donner pour instruction au SoC (102) de recevoir une première image d'amorçage sur le bus de communication ;
la réception, en utilisant un circuit d'interface de stockage (104) du SoC (102), de la première image d'amorçage depuis une puce de mémoire non volatile ;
la configuration, en exécutant la première image d'amorçage sur un circuit processeur (110) du SoC (102), d'un module d'interface de bus logiciel qui est destiné à communiquer avec un dispositif hôte (118) sur le bus de communication qui relie de multiples dispositifs au SoC (102),
dans lequel la configuration du module d'interface de bus logiciel inclut la programmation, en utilisant des données de flux binaire, de la logique programmable (112) du SoC (102) pour implémenter le module d'interface de bus logiciel ;
la communication, en utilisant le module d'interface de bus logiciel, d'une deuxième image d'amorçage depuis une mémoire (120) du dispositif hôte (118) vers une mémoire du SoC (102) ; et
l'amorçage du SoC (102) en exécutant la deuxième image d'amorçage.

2. Procédé selon la revendication 1, dans lequel le module d'interface de bus logiciel est en outre destiné à communiquer avec le dispositif hôte (118) en utilisant un protocole basé sur des paquets et sur une liaison de point à point entre le dispositif hôte (118) et le SoC (102) et dans lequel le protocole basé sur des paquets définit des paquets qui encapsulent des données et spécifient une adresse de destination.

3. Procédé selon la revendication 1, comprenant en outre l'implémentation d'un protocole d'établissement de liaison avec le dispositif hôte (118) pour fournir la deuxième image d'amorçage et le circuit processeur du SoC (102).

4. Procédé selon la revendication 1, dans lequel le bus de communication est un bus de communication Interconnexion de composants périphériques express, PCIe, et dans lequel le SoC (102) inclut des tuiles de logique programmable.

5. Procédé selon la revendication 4, dans lequel la configuration du module d'interface de bus logiciel inclut l'énumération du module d'interface de bus logiciel pour une communication avec un module complexe racine du dispositif hôte (118).

6. Procédé selon la revendication 5, comprenant en outre la définition d'une valeur dans un espace de mémoire bloc-notes en réponse à l'achèvement de l'énumération du module d'interface de bus logiciel.

7. Procédé selon la revendication 1, dans lequel la première image d'amorçage est une image de mémoire morte (ROM) d'amorçage et la deuxième image d'amorçage est une image de chargeur d'amorçage de premier étage (FSBL) ou dans lequel la première image d'amorçage est une image de chargeur d'amorçage de premier étage (FSBL) et la deuxième image d'amorçage est une image de chargeur d'amorçage de deuxième étage (SSBL).

8. Système comprenant :
un système sur puce, SoC (102), qui inclut :
une logique programmable (112) ;
un circuit d'interface de stockage (104) configuré pour recevoir une première image d'amorçage depuis une puce de mémoire non volatile ;
un module d'interface E/S matériel (114) qui est implémenté en utilisant un système de circuit dans le SoC (102) qui est disponible au démarrage ; et
un circuit processeur configuré pour :
configurer un bus de communication au moyen du module d'interface E/S matériel (114) ;
exécuter une image de mémoire morte, ROM, d'amorçage pour donner pour instruction au SoC (102) de recevoir la première image d'amorçage sur le bus de communication ;
exécuter la première image d'amorçage pour :
programmer, en utilisant des données de flux binaire, la logique programmable (112) pour implémenter un module d'interface de bus logiciel qui est configuré pour communiquer avec un dispositif hôte (118) sur le bus de communication qui relie de multiples dispositifs au SoC (102) ; et
configurer le module d'interface de bus logiciel pour transférer une deuxième image d'amorçage depuis une mémoire du dispositif hôte (118) vers le SoC (102) ; et
amorcer le SoC (102) en exécutant la deuxième image d'amorçage.

9. Système selon la revendication 8, dans lequel le module d'interface de bus logiciel est en outre destiné à communiquer avec le dispositif hôte (118) en utilisant un protocole basé sur des paquets et sur une liaison de point à point entre le dispositif hôte (118) et le SoC (102) et dans lequel le protocole basé sur des paquets définit des paquets qui encapsulent des données et spécifient une adresse de destination.

10. Système selon la revendication 8, dans lequel le circuit processeur est en outre configuré pour implémenter un protocole d'établissement de liaison avec le dispositif hôte (118) fournissant la deuxième image d'amorçage.

11. Système selon la revendication 10, dans lequel le circuit d'interface de stockage (104) est en outre configuré pour charger l'image de mémoire morte, ROM, d'amorçage ; et
dans lequel l'image de ROM d'amorçage inclut des instructions pour le SoC (102) pour mettre en œuvre la réception de la première image d'amorçage depuis la puce de mémoire non volatile.

12. Système selon la revendication 8, dans lequel le bus de communication est un bus de communication Interconnexion de composants périphériques express, PCIe, et dans lequel le SoC (102) inclut des tuiles de logique programmable et dans lequel le circuit processeur est configuré pour configurer le module d'interface de bus logiciel dans le cadre d'un processus d'énumération pour le bus de communication PCIe.

13. Système selon la revendication 12, dans lequel le circuit processeur est configuré pour définir une valeur dans un espace de mémoire bloc-notes en réponse à l'achèvement de l'énumération du module d'interface de bus.

14. Système selon la revendication 8, dans lequel la première image d'amorçage est une image de chargeur d'amorçage de premier étage (FSBL) et la deuxième image d'amorçage est une image de chargeur d'amorçage de deuxième étage (SSBL).
